# EUROPEAN PATENT SPECIFICATION

(11) **EP 0 550 170 B1**
(45) Date of publication and mention of the grant of the patent: **14.02.1996**
(21) Application number: 92311231.2
(22) Date of filing: 09.12.1992
(51) Int. Cl.: B65H 35/00, B05C 21/00, B05D 3/02, F26B 3/30

(54) **Assembly and method for surface protection**
Anordnung und Verfahren zum Schützen von Oberflächen
Assemblage et procédé pour protéger une surface

(30) Priority: 30.12.1991 US 816323
(43) Date of publication of application: 07.07.1993
(73) Proprietor: MINNESOTA MINING AND MANUFACTURING COMPANY, St. Paul, Minnesota 55133-3427 (US)
(72) Inventor: Cayford, James D., c/o Minnesota Mining, St. Paul, Minnesota 55133-3427 (US); Petrush, Robert J., c/o Minnesota Mining, St. Paul, Minnesota 55133-3427 (US)
(74) Representative: Baillie, Iain Cameron

(56) References cited:
- EP-A- 0 315 410
- FR-A- 2 454 394
- US-A- 3 130 078
- US-A- 4 343 533
- US-A- 4 450 201
- US-A- 4 990 214
- PATENT ABSTRACTS OF JAPAN vol. 13, no. 335 (M-856)27 July 1989 & JP-A-11 14 434 (GOTO DENICHIRO) 8 May 1989
- DATABASE WPIL Section Ch, Week 8220, Derwent Publications Ltd., London, GB; Class A09, AN 82-40359E & JP-A-57 059 748 (NITTO ELECTRIC IND KK) 10 April 1982

## Description

### Technical Field

The present invention relates to methods for protecting surfaces from radiant heat, and in one important aspect to methods for protecting outer surface portions of automobiles from heat during radiant heating to cure paint on other newly painted outer surface portions of the automobiles.

### Background Art

At least one major automobile manufacturer inspects the paint quality on automobiles moving along an assembly line after the wheels and tires are attached and after body parts made of polymeric materials such as body side moldings, bumpers, grilles and light housings have been assembled onto the automobiles. If a paint defect is found on an automobile, that automobile is diverted onto a auxiliary portion of the assembly line where the paint defect is repaired. That repair is affected by covering the automobile with a polymeric sheet in the form of a large bag, cutting away the portion of the bag over the portion of the automobile on which the paint surface to be repaired, using masking tape to attach the bag to the automobile around the periphery of that surface portion to be repaired so that the rest of the automobile will be protected from paint overspray, preparing and repainting the exposed surface portion, and then directing radiant heaters at the automobile to cure the paint on the newly painted surface. If this repair process is performed without appropriate protection, the radiant heat used to cure the paint can fuse the polymeric sheet to the the body parts made of polymeric materials, and can soften and deform certain of those body parts. Thus, to provide needed protection, an aluminum foil and masking tape composite material is formed on a non portable apron taper. In that composite material the masking tape has a portion adhered along one edge portion of the aluminum foil and a portion projecting from that edge portion of the aluminum foil by which the composite material can be adhered to a substrate. The exposed portion of the coating of pressure sensitive adhesive on the tape and aluminum foil composite is adhered to a surface of the automobile before the polymeric bag is put in place with the aluminum foil extending over the portions of the outer surface of the automobile to be protected from the radiant heat used to cure the paint. While the aluminum foil is effective in providing protection from such radiant heating for the parts on the automobile over which it is positioned, the aluminum foil and masking tape composite is difficult to handle and apply due to the need to transport long lengths of the composite from a fixed location and the tendency for the aluminum foil to tear prior to application.

### Disclosure of Invention

The present invention provides a method for protecting a surface from radiant heat, which method is useful for several purposes particularly including protecting portions of an automobile from heat during radiant heating used to cure paint on another newly painted outer surface portion of the automobile. When used for that purpose, the method is as effective, and more easily provided than the known method for providing such protection described above.

According to this invention there is provided a method as in claim 1 and a portable assembly as in claim 5 herein.

The method according to the present invention for protecting surfaces from radiant heat generally comprises the steps of (1) providing a roll of masking material which comprises a layer of flexible nonmetallic backing material having a coating of metal on one surface that provides a reflectance of at least 50 percent of the radiant heat for the sheet of masking material; (2) providing a easily portable dispensing device (e.g., that portable dispensing device described in U.S. Patent No. 4,667,891 incorporating the improvements described in U.S. Patents Nos. 4,913,767, 4,915,769, 4,989,769 and 4,990,214) comprising a frame having a handle adapted for manual manipulation of the dispensing device and first and second spindles mounted on the frame for rotation about axes that are parallel and spaced; (3) mounting the tape roll coaxially about the first spindle with the first edge of the length of tape at a first predetermined position axially with respect to the first and second spindles; (4) mounting the roll of masking material coaxially about the second spindle with the first edge of the sheet at a second predetermined position axially with respect to the first and second spindles, and with the width of the length of tape extending from the first position past the second position and the width of the masking material extending from the second position past the first position so that a portion of the length of tape along the first edge of the length of tape and a portion of the sheet along the first edge of the sheet are both positioned between the first and second positions; (5) pulling the tape and masking material from the dispensing device along paths relative to the frame including a path for the length of tape from the tape roll and a path for the sheet from the roll of masking material, the paths including a common path portion so that the pressure sensitive adhesive along the first edge of the length of tape adheres to the portion of the sheet along the first edge of the sheet to form a tape and masking material composite having opposite edges defined by the second edges of the length of tape and the masking material and an exposed portion of the coating of pressure sensitive adhesive along the second edge of the length of tape; and (6) adhering the exposed portion of the coating of pressure sensitive adhesive on the tape and masking material composite to a surface with the masking material extending between the surface to be protected and the source of radiant heat.

The method according to the present invention is particularly useful for protecting portions of the outer surface of an automobile from heat during radiant heating of a newly painted outer surface portion of the automobile. When used for that purpose, the method includes placing the masking material over the portion of the outer surface of the automobile to protect that portion of the outer surface of the automobile from radiant heat used to cure paint on another newly painted outer surface portion of the automobile, and the method provides the significant advantages over the known method of protection using aluminum foil described above that the tape and masking material composite is made by a portable device and thus can be made closely adjacent or along the portion of the surface to which it is to be adhered, and the tape and masking material composite is much lighter, stronger and more easily handled than composite material made with tape and aluminum foil, while being at least as effective as composite material made with tape and aluminum foil.

When used to protect an outer surface portion of an automobile, the method according to the present invention can further include the step of covering with a polymeric sheet the portion of the outer surface of the automobile to be protected from radiant heat during radiant heating of a newly painted outer surface portion of the automobile, in which case the exposed portion of the coating of pressure sensitive adhesive on the tape and masking material composite either (1) can be adhered to a surface of the automobile before the automobile is covered with the polymeric sheet so that the masking material extends over the portion of the outer surface of the automobile to be protected beneath the polymeric sheet; or (2) can be adhered to a surface of the polymeric sheet opposite the automobile after the automobile is covered with the polymeric sheet so that the masking material extends over the portion of the outer surface of the automobile and over the polymeric sheet which provides the added advantage that the masking material is removed with the bag after the painting operation.

There are many other uses for the method according to the present invention for protecting a surface from radiant heat, including applying the tape and masking material composite as a temporary window shade which can, for example, prevent improper curing of new varnish on a wooden floor that can result from the radiant heat in sunlight shining through a window onto the floor, while still passing sufficient sun light (e.g., ten percent visible light transmission) to illuminate the room for the workmen applying the varnish.

The flexible non metallic backing material in the masking material could be made of many materials, including polymeric materials such as polypropylene, polyethylene, or acrylic, or non polymeric materials such as paper or cloth. Preferably, however, the backing material is general purpose polyester that could be from 0.0064 mm (0.00025 inch) to over 0.076 mm (0.003 inch) thick and preferably is in the range of 0.0127 to 0.025 mm (0.0005 to 0.001 inch) thick. Polyester is preferred because of its flexibility and its resistance to tearing, stretching or fracture both at room temperature and at the elevated temperatures at which metal can be applied to its surface by the metal evaporating process.

The metal coating in the masking material is preferably aluminum applied to the backing material by a vacuum deposition process (e.g. the metal evaporating process), however, other metals capable of reflecting radiant heat could also be used, such as nickel, silver or metal alloys such as "Nichrome" (T.M.). The metal in the coating should be applied in a thickness that is very much thinner than the backing material while providing a reflectance of the radiant heat it is intended to protect against of at least 50 percent and preferably at least about 70 percent. Also, preferably the sheet of masking material in the roll is disposed with the metal coating on the outer surface of the backing material with respect to the radius of the roll. This results in the metal layer being on the outer surface of the backing material when the tape and masking material composite is adhered over a surface to be protected, and thereby results in greater reflectance of radiant heat for a given metal coating thickness (particularly reflectance of heat in the infrared range) than when the metal coating is on the inner surface of the backing material on the roll.

### Brief Description of Drawing

The present invention will be further described with reference to the accompanying drawing wherein like reference numerals refer to like parts in the several views, and wherein:
Figure 1 is a perspective view of a portable assembly according to the present invention;
Figure 2 is an enlarged fragmentary view taken approximately along lines 2-2 of Figure 1 showing the structure of a tape and masking material composite made on the portable assembly of Figure 1;
Figure 3 is a perspective view illustrating the portable assembly of Figure 1 being used to apply the tape and masking material composite to the surface of an automobile;
Figures 4 is an enlarged fragmentary view illustrating a polymeric sheet applied over the tape and masking material composite applied to the surface of the automobile as illustrated in Figure 3;
Figures 5 is an enlarged fragmentary view illustrating the tape and masking material composite applied to the outer surface of a polymeric sheet disposed over an automobile;
Figures 6 is a perspective view of an alternate embodiment of a roll of masking material for use in the portable assembly according to the present invention;
Figure 7 is an enlarged fragmentary view taken approximately along line 7-7 of Figure 6; and
Figure 8 is a fragmentary perspective view illustrating the use of the tape and masking material composite as a temporary window shade.

### Detailed Description

Referring now to the drawing, there is shown a portable assembly according to the present invention, generally designated by the reference numeral 10, which portable assembly 10 is adapted for forming a composite useful for protecting a surface from a source of radiant heat, for example to protect an outer surface portion of an automobile during radiant heating to cure paint on another newly painted outer surface portion of the automobile.

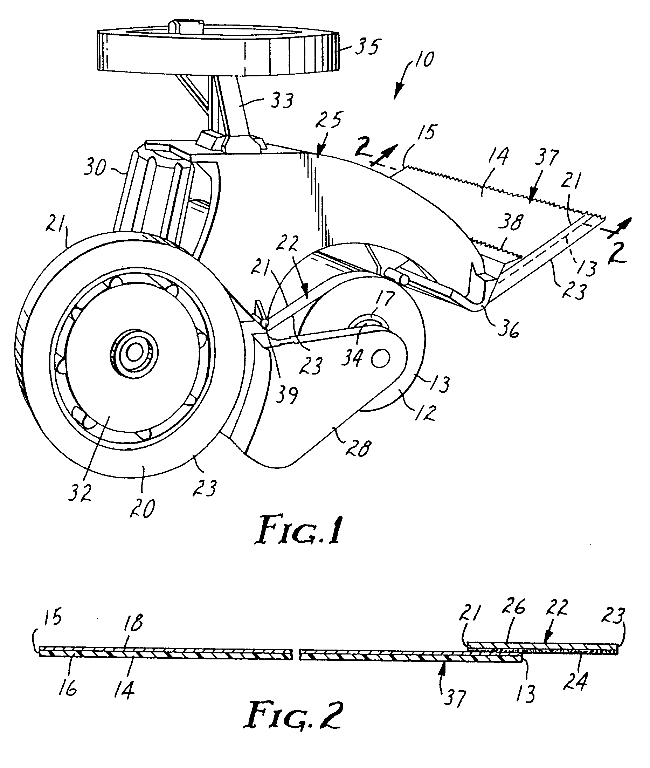

Generally the portable assembly 10 comprises a roll 12 of masking material, which roll 12 has an axis and comprises an elongate thin flexible sheet 14 of masking material having opposite first and second untaped elongate edges 13 and 15, which sheet 14 of masking material is coiled around a cylindrically tubular core 17. The roll 12 of masking material has first and second axially spaced ends defined by the first and second elongate edges 13 and 15 of the sheet 14 of masking material. The sheet 14 of masking material (see Figure 2) comprises a layer 16 of flexible backing material (e.g., polyester) having opposite major surfaces and a coating 18 of metal (e.g., aluminum) on the surface of the layer 16 of flexible backing material that is disposed radially outermost in the roll 12. That coating 18 of metal provides a reflectance for radiant heat of at least 50 percent and preferably above 70 percent for the sheet 14 of masking material. Preferably the sheet 14 off masking material is made by coating one side of general purpose polyester film in the range of 0.0127 to 0.025 mm (0.0005 to 0.001 inch) thick with 99.99 percent pure aluminum using a conventional vacuum deposition (e.g., metal evaporation) technique. The aluminum is coated in an amount that, 48 hours after the coating process, will provide a reflectance for visible radiation of about 70 percent (e.g., 70 percent reflectance within a wide tolerance such as plus or minus 10 percent) for such radiation directed against the exposed surface of the coating 18 of aluminum, which coating 18 of aluminum also provides a reflectance of at least 70 percent (i.e., normally over 80 percent) for radiant heat in the infrared range. Such reflectance for radiant heat in the infrared range is believed to be the most important aspect when the sheet 14 of masking material is used to protect against the heat radiating from radiant heat panels of the type used to dry paint on auto bodies in some automobile manufacturing lines.

The portable assembly 10 also includes a tape roll 20 comprising a coiled length of tape 22 having first and second elongate edges 21 and 23 and comprising a coating 24 of pressure sensitive adhesive on one surface of a backing 26. For many purposes when the tape 22 is to be exposed to radiant heat and then needs to be cleanly removed from a substrate the tape 22 should be that tape adapted for high temperature use that is commercially available from Minnesota Mining and Manufacturing Company, St. Paul, Minnesota under the trade designation No 2317 masking tape; which tape can be exposed to radiant heat for the time typically needed to cure the paint and will thereafter cleanly release from a substrate to which it is adhered. Other masking tapes, however, could be suitable where the tape is not exposed to high temperatures or where clean removal of the tape is not a requirement (e.g., where the tape is adhered to the outer surface of a polymeric sheet that is later disposed of).

The portable assembly 10 further includes an easily portable dispensing device 25 comprising a frame 28 including a handle 30 adapted for manual engagement, first and second spindles 32 and 34 having axes, and means mounting the spindles 32 and 34 on the frame 28 for rotation about their axes with their axes spaced and generally parallel. The tape roll 20 is mounted coaxially about the first spindle 32 with the first edge 21 of the length of tape 22 at a first predetermined position axially with respect to the first and second spindles 32 and 34, and the roll 12 of masking material is mounted coaxially about the second spindle 34 with the first edge 13 of the sheet of masking material 14 at a second predetermined position axially with respect to the first and second spindles 32 and 34, and with the width of the tape 22 extending from the first position past the second position and the width of the sheet of masking material 14 extending from the second position past the first position so that a portion of the length of tape 22 along its first edge 21 and a portion of the sheet of masking material 14 along its first edge 37 are both positioned between the first and second positions. Path defining means on the frame 28 and including means provided by or adjacent the spindles 32 and 34 locate the first edges 21 and 13 of the tape 22 and the sheet 14 of masking material respectively at the first and second positions axially with respect to the spindles 32 and 34 and define a path for the length of tape 22 from the tape roll 20 to the periphery of the roll 12 of masking material, a path for the sheet 14 of masking material from the roll 12 of masking material, and a common path portion beginning on the periphery of the roll 12 of masking material where, in response to the tape 22 and the sheet of masking material 14 being pulled from the dispensing device 25 around a guide shoe 36, the pressure sensitive adhesive 24 along the first edge 21 of the length of tape 22 adheres to the portion of the sheet 14 of masking material 14 along its first edge 13 to form a tape and masking material composite 37 having opposite edges defined by the second edges 23 and 15 of the length 22 of tape and the sheet 14 of masking material and an exposed portion of the coating 24 of pressure sensitive adhesive along the second edge 23 of the length 22 of tape. After a desired length of the tape and masking material composite 37 is formed by the dispensing device 25 and manually cut off by a cutting blade 38 on the dispensing device 25, that exposed portion of the coating 24 of pressure sensitive adhesive is adapted to be adhered to a surface with the sheet 14 of masking material 14 extending over a portion of the outer surface of the automobile to protect that portion from radiant heat used to cure paint on another outer portion of the automobile.

Preferably, as illustrated, the dispensing device 25 is generally the type of device described in U.S. Patent No. 4,667,891 in which the cut off blade 38 is the type of blade adapted for cutting polymeric material that is described in U.S. Patent No. 4,913,767 and is protected by a blade guard (not shown) of the type described in U.S. Patent No. 4,989,769; there is provided a detachable support assembly 33 for an auxiliary roll of tape 35 of the type described in U.S. Patent No. 4,915,769; and there is included a tracking member 39 of the type described in U.S. Patent No. 4,990,214.

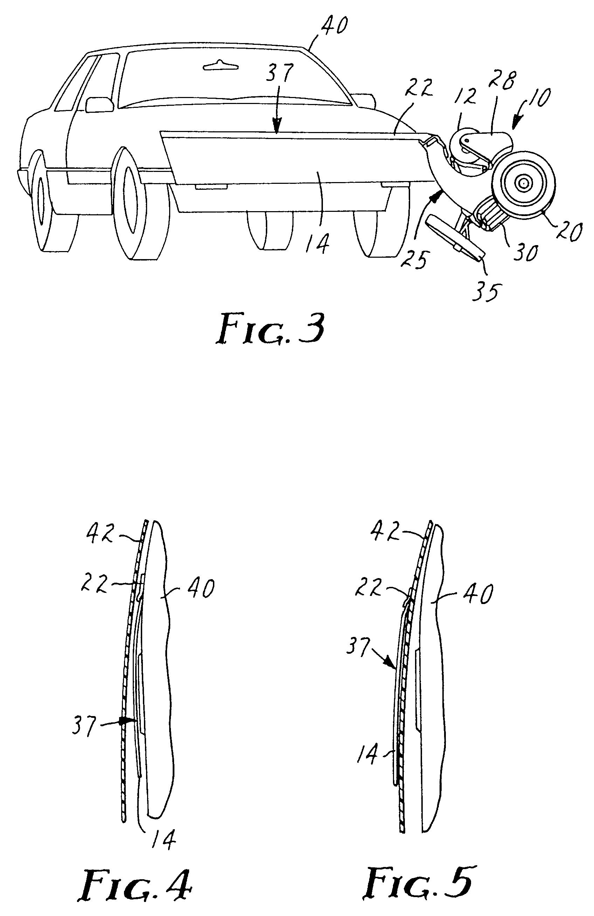

Figures 3, 4 and 5 illustrate use of the method according to the present invention for protecting outer surface portions of an automobile 40 from heat during radiant heating to cure paint on another newly painted outer surface portion of the automobile 40 which comprises the steps of providing the roll 12 of masking material, the roll 20 of tape and the portable dispensing device 25 described above and mounting the rolls 12 and 20 on the spindles 32 and 34 of the device 25 in the manner indicated above. The tape 22 and the masking material 14 are then pulled from the dispensing device 25 to form the tape and masking material composite 37 having an exposed portion of the coating 24 of pressure sensitive adhesive along the second edge 23 of the length of tape 22. The exposed portion of the coating 24 of pressure sensitive adhesive on the tape and masking material composite 37 is then adhered to a surface with the masking material 12 extending over the portion of the outer surface of the automobile 40 to protect that portion of the outer surface of the automobile 40 from radiant heat used to cure paint on another newly painted outer surface portion of the automobile 40.

Prior to painting and directing radiant heaters at the automobile 40 to cure the paint on the newly painted surface, the method can further include the known steps illustrated in Figures 4 and 5 of covering the portions of the outer surface of the automobile 40 that are not to be painted with a polymeric sheet 42 to protect them from debris and paint overspray. That covering step can be performed by placing a large polymeric bag 42 over the automobile 40, cutting away the portion of the bag 42 over the portion of the automobile 40 on which the paint surface to be repaired, and using masking tape to attach the bag 42 to the automobile 40 around the periphery of that surface portion to be repaired so that the rest of the automobile 40 will be protected from debris and paint overspray as the exposed surface portion is prepared and repainted. The exposed portion of the coating 24 of pressure sensitive adhesive on the tape and masking material composite 37 either (1) can be adhered to a surface of the automobile 40 before the automobile is covered with the polymeric sheet or bag 42 as is illustrated in Figure 3 so that the masking material 14 extends over the portion of the outer surface of the automobile 40 to be protected beneath the polymeric sheet or bag 42 as is illustrated in Figure 4, or (2) can be adhered to a surface of the polymeric sheet 42 opposite the automobile 40 with the masking material 14 extending over the portion of the outer surface of the automobile 40 to be protected over the polymeric sheet 42 as is illustrated in Figure 5. Adhering the the tape and masking material composite 37 to the surface of the polymeric sheet 42 opposite the automobile 40 as is illustrated in Figure 5 provides the advantage that the tape and masking material composite 37 can be removed with the bag 42 after the paint is cured.

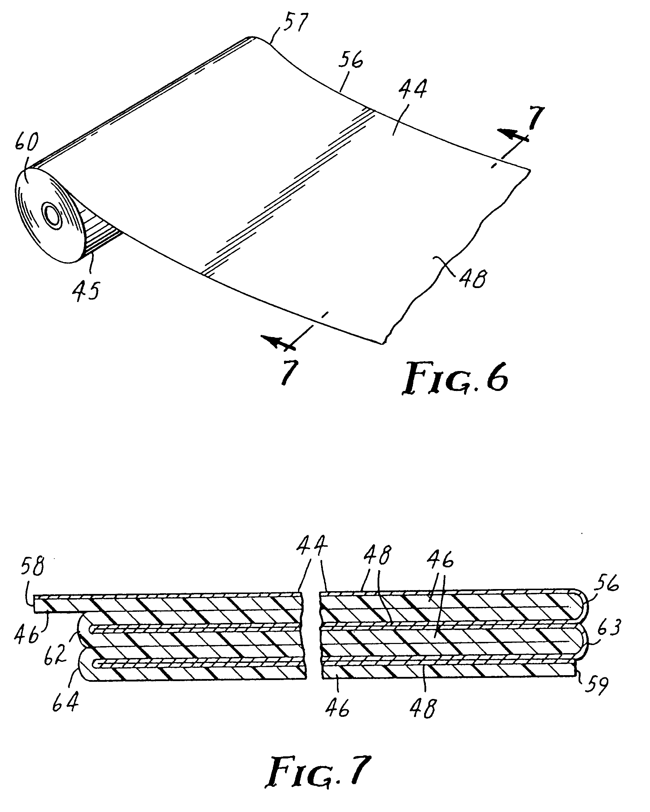

As illustrated in Figure 1 and described above, the coiled sheet of masking material 14 is not folded so that first and second ends of the roll 12 of masking material are defined by the first and second elongate edges 13 and 15 of the sheet 14 of masking material. Optionally, when a wider width is desired, a sheet 44 of masking material can be folded and wound into a roll 45 of masking material as is illustrated in Figures 6 and 7 and as is further described in allowed U.S. Patent Application No. 07/642,712, which roll 45 of masking material can be used in place of the roll 12 of masking material on the dispensing device 25 to form a portable assembly according to the present invention on which can be formed a tape and masking material composite from the tape 22 and the sheet 44 of masking material.

The sheet 44 of masking material (see Figure 7) comprises a layer 46 of flexible backing material (e.g., polyester) having opposite major surfaces and a coating 48 of metal (e.g., aluminum) on the surface of the layer 46 of flexible backing material that is disposed radially outermost in the roll 45. Like the coating 18 of metal described above, that coating 48 of metal provides a reflectance for radiant heat of at least 50 percent and preferably above 70 percent for the sheet 44 of masking material.

The sheet 44 of masking material illustrated in Figures 6 and 7 has a longitudinally extending first fold 56 at a second end 57 of the roll 45 of masking material and between the first and second edges 58 and 59 of the sheet 44 of masking material. The first fold 56 defines a second edge of a first pleat-like portion of the sheet 44 of masking material extending between the first fold 56 and the first edge 58 of the elongate sheet 44 of masking material. The first pleat-like portion has opposite inner and outer major surfaces with its outer major surface being defined by the coating 48 of metal and being disposed radially outwardly on the roll 45 of masking material with respect to the inner major surface. The first fold 56 defines a first edge of a second pleat-like portion of the sheet 44 of masking material extending from the first fold 56 toward a first end 60 of the roll 45 of masking material along the inner major surface of the first pleat-like portion and having a second longitudinally extending edge adjacent the first end 60 of the roll 45 of masking material defined by a second fold 62. The sheet 44 of masking material also includes two additional folds 63 and 64 which together with the folds 56 and 62 define a plurality of or four pleat like portions of the sheet 44 of masking material disposed radially inwardly of the roll 45 of masking material from the inner major surface of the first pleat-like portion and having longitudinally extending generally radially aligned edges adjacent the first end 60 of the roll 45 of masking material that are closely spaced (e.g., in the range of 0.076 to 7.9 mm (0.003 to 0.312 inch) from the first edge 58 of the sheet 44 of masking material to both restrict contact of the pressure sensitive adhesive 24 on the tape 22 with the adjacent folds defining the pleat-like portions when the tape 22 is adhered to the outer surface of the first pleat like portion, while providing support radially of the roll 45 of masking material for the first pleat-like portion of the sheet 44 closely adjacent the first edge 58 of the sheet 44 of masking material to assure firm engagement of the pressure sensitive adhesive 24 with the sheet 44 of masking material adjacent the first edge 58 as the tape 22 and sheet 44 of masking material are pulled from the dispensing device 25 to form the tape and masking material composite.

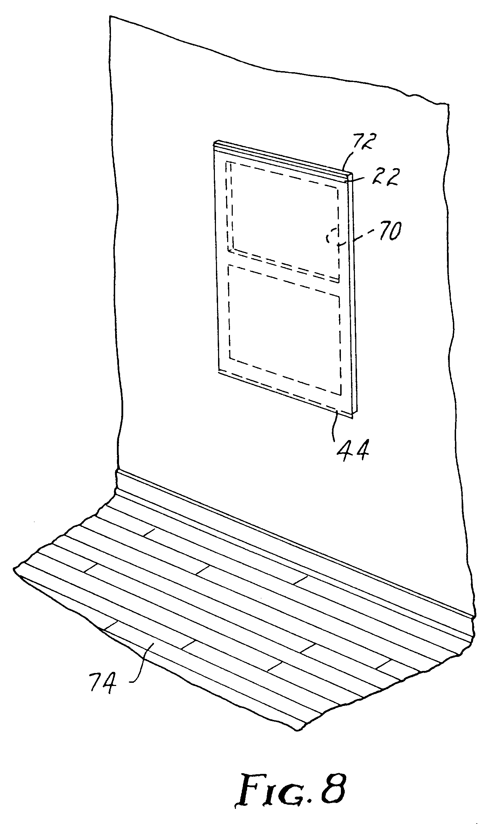

Using the roll 45 of masking material in place of the roll 12 of masking material on the dispensing device 25 to form a tape and masking material composite from the tape 22 and the sheet 44 of masking material can provide advantages when a wider sheet 44 of masking material is desired, such as to cover a larger portion of the outer surface of an automobile or for other purposes. One such other purpose is illustrated in Figure 8 in which a tape and masking material composite from the tape 22 and the sheet 44 of masking material has been used to cover a window 70 by adhering exposed pressure sensitive adhesive on the tape 22 to an upper portion 72 of the frame for the window 70, thereby providing a temporary radiant heat reflective shade for the window 70 to restrict improper curing of a fresh coat of varnish on a wooden floor 74 that could result if the sheet 44 of masking material was not present, as a result of radiant heat in sunlight shining through the window 44 onto the floor 74. When used for this purpose, preferably the sheet 44 of masking material should have a visible light transmissivity of at least ten percent to provide light for workmen applying the varnish, and may optionally include an ultraviolet light absorber to further restrict solar ultraviolet radiation.

The present invention has now been described. It will be apparent to those skilled in the art that many changes or modifications can be made in the methods and embodiments described without departing from the scope of the present invention as defined by and to be understood from the normal construction of the claims.

## Claims

1. A method for protecting a surface portion from a source of radiant heat, said method comprising the steps of:
a) providing a roll (12;45) of masking material having an axis, the roll (12;45) of masking material comprising a coiled elongate thin flexible sheet (14;44) of masking material having opposite first and second untaped elongate edges (13;58 and 15;59), and the roll (12;45) of masking material having first and second axially spaced ends with the first end of the roll (12;45) being defined by the first elongate edge (13;58) of the sheet (14;44), the sheet (14;44) of masking material comprising a layer (16;46) of flexible backing material having opposite major surfaces and a coating (18;48) of metal on one of the surfaces of the backing material providing a reflectance of a least 50 percent of radiant heat for the sheet (14;44) of masking material;
b) providing a tape roll (20) comprising a coiled length of tape (22) having first and second elongate edges (21 and 23) and comprising a coating (24) of pressure sensitive adhesive;
c) providing a portable dispensing device (25) comprising a frame (28) having a handle (30) adapted for manual manipulation of the dispensing device (25) and first and second spindles (32 and 34) having axes and being mounted on the frame (28) for rotation about their axes with their axes spaced and generally parallel;
d) mounting the tape roll (20) coaxially about the first spindle (32) with the first edge (21) of the length of tape (22) at a first predetermined position axially with respect to the first and second spindles (32 and 34);
e) mounting the roll (12;45) of masking material coaxially about the second spindle (34) with the first edge (13;58) of the sheet (14;44) at a second predetermined position axially with respect to the first and second spindles (32 and 34), and with the width of the length of tape (22) extending from the first position past the second position and the width of the sheet (14;44) of masking material extending from the second position past the first position so that a portion of the length of tape (22) along the first edge (21) of the length of tape (22) and a portion of the sheet (14;44) of masking material along the first edge (13;58) of the sheet (14;44) of masking material are both positioned between the first and second positions;
f) pulling the tape (22) and sheet (14;44) of masking material from the dispensing device (25) along paths relative to the frame (28) including a path for the length of tape (22) from the tape roll (20) and a path for the sheet (14;44) of masking material from the roll (12;45) of masking material, the paths including a common path portion so that the pressure sensitive adhesive (24) along the first edge (21) of the length of tape (22) adheres to the portion of the sheet (14;44) of masking material along the first edge (13;58) of the sheet (14;44) of masking material to form a tape and masking material composite (37) having opposite edges defined by the second edges (23 and 15;59) of the length of tape (22) and the sheet (14;44) of masking material and an exposed portion of the coating (24) of pressure sensitive adhesive along the second edge (23) of the length of tape (22); and
g) adhering the exposed portion of the coating (24) of pressure sensitive adhesive on the tape and masking material composite (37) to a surface with the sheet (14;44) of masking material extending between the portion of the outer surface to be protected and the source of radiant heat.

2. A method for protecting according to claim 1 wherein said surface portion is an outer surface portion of an automobile (40) and in step (g) the sheet (14;44) of masking material extends over the portion of the outer surface of the automobile (40) to protect that portion of the outer surface of the automobile (40) from radiant heat used to cure paint on another newly painted outer surface portion of the automobile (40).

3. A method for protecting according to claim 2 further including the step of covering with a polymeric sheet (42) the portion of the outer surface of the automobile (40) to be protected from radiant heat during radiant heating of a newly painted outer surface portion of the automobile (40), and wherein in said adhering step the exposed portion of the coating (24) of pressure sensitive adhesive on the tape and masking material composite (37) is adhered to a surface of the automobile (40) with the masking material extending over the portion of the outer surface of the automobile (40) beneath the polymeric sheet (42) to protect that portion of the outer surface of the automobile (40) from radiant heat.

4. A method for protecting according to claim 2 further including the step of covering with a polymeric sheet (42) the portion of the outer surface of the automobile (40) to be protected from radiant heat during radiant heating of a newly painted outer surface portion of the automobile (40), and wherein in said adhering step the exposed portion of the coating (24) of pressure sensitive adhesive on the tape and masking material composite (37) is adhered to a surface of the polymeric sheet (42) opposite the automobile (40) with the masking material extending over the portion of the outer surface of the automobile (40) and over the polymeric sheet (42) to protect that portion of the outer surface of the automobile (40) from radiant heat.

5. A portable assembly (10) for forming a composite (37) useful for protecting a surface, said portable assembly (10) comprising:
a roll (12;45) of masking material having an axis, said roll (12;45) comprising a coiled elongate thin flexible sheet (14;44) of masking material having opposite first and second untaped elongate edges (13;58 and 15;59), and said roll (12;45) of masking material having first and second axially spaced ends with said first end or said roll (12;45) being defined by the first elongate edge (13;58) of said sheet (14;44);
a tape roll (20) comprising a coiled length of tape (22) having first and second elongate edges (21 and 23) and comprising a coating (24) of pressure sensitive adhesive;
an easily portable dispensing device (25) comprising a frame (28) including a handle (30) adapted for manual engagement, first and second spindles (32 and 34) having axes, means mounting said spindles (32 and 34) on said frame (28) for rotation about said axes with said axes spaced and generally parallel, means for mounting said tape roll (20) coaxially about the first spindle (32) with the first edge (21) of the length of tape (22) at a first predetermined position axially with respect to said first and second spindles (32 and 34), and means for mounting said roll (12;45) of masking material coaxially about the second spindle (34) with the first edge (13;58) of the sheet (14;44) of masking material at a second predetermined position axially with respect to said first and second spindles (32 and 34), and with the width of said length of tape (22) extending from the first position past the second position and the width of the sheet (14;44) of masking material extending from the second position past the first position so that a portion of the length of tape (22) along the first edge (21) of the length of tape (22) and a portion of the sheet (14;44) of masking material along the first edge (13;58) of the sheet (14;44) of masking material are both positioned between said first and second positions; and path defining means on said frame (28) and including means for locating said first edges (21 and 13) of said tape (22) and said sheet (14;44) of masking material respectively at said first and second positions axially with respect to said spindles (32 and 34), said path defining means defining a path for said length of tape (22) from said tape roll (20), a path for said sheet (14;44) of masking material from said roll (12;45) of masking material, and a common path portion where, in response to the tape (22) and said sheet (14;44) of masking material being pulled from the dispensing device (25), the pressure sensitive adhesive (24) along the first edge (21) of the length of tape (22) adheres to said portion of the sheet (14;44) of masking material along the first edge (13;58) of the sheet (14;44) of masking material to form a tape and masking material composite (37) having opposite edges defined by the second edges (23 and 15;59) of the length of tape (22) and the sheet (14;44) of masking material and an exposed portion of the coating (24) of pressure sensitive adhesive along the second edge (23) of the length of tape (22), said exposed portion of the coating (24) of pressure sensitive adhesive being adapted to be adhered to a surface with the sheet (14;44) of masking material extending along a surface to be protected, said portable assembly (10) being characterized by the feature that said sheet (14;44) of masking material comprises a layer (16;46) of flexible backing material having opposite major surfaces and a coating (18;48) of metal on one of said surfaces of said flexible backing material providing a reflectance of at least 50 percent of radiant heat for said sheet (14;44) of masking material so that said portable assembly (10) forms a composite (37) useful for protecting a surface from radiant heat by adhering the composite to a surface between a surface to be protected and a source of radiant heat.

6. A portable assembly (10) according to claim 5 wherein said flexible backing material (16;46) is of polyester in the range of 0.0064 to 0.076mm (0.00025 to 0.003 inch) thick and said metal in said coating (18;48) is aluminum.

7. A portable assembly (10) according to claim 5 wherein said flexible backing material (16;46) is of polyester in the range of 0.0127 to 0.025mm (0.0005 to 0.001 inch) thick, and said metal in said coating (18;48) is aluminum and provides a reflectance of at least 70 percent of radiant heat for said sheet (14;44) of masking material.

8. A portable assembly (10) according to claim 5 wherein said flexible backing material (16;46) is of polyester in the range of 0.0127 to 0.025mm (0.0005 to 0.001 inch) thick, said metal in said coating (18;48) is aluminum and provides a reflectance of at least about 70 percent of radiant heat for said sheet (14;44) of masking material, and said sheet (14;44) of masking material in said roll (12;45) of masking material is disposed with said coating (18;48) of metal on the outer surface of said backing material with respect to the radius of the roll (12;45) of masking material.

9. A portable assembly (10) according to claim 5 wherein said tape (22) in said tape roll (20) is adapted to be exposed to radiant heat for the time typically needed to cure paint and will thereafter cleanly release from a substrate to which it is adhered.

10. A portable assembly (10) according to claim 5 wherein said first and second axially spaced ends of said roll (12) of masking material are defined by the first and second elongate edges (13 and 15) of said sheet (14) of masking material

11. A portable assembly (10) according to claim 5 wherein said sheet (44) of masking material has a longitudinally extending first fold (56) at the second end (57) of said roll (45) of masking material and between said first and second edges (58;59) of said sheet (44) of masking material, said first fold (56) defines a second edge of a first pleat-like portion of said sheet (44) of masking material extending between said first fold (56) and said first edge (59) of said sheet (44) of masking material, said first pleat-like portion has opposite inner and outer major surfaces with said outer major surface disposed radially outwardly on said roll (45) of masking material with respect to said inner major surface, and said first fold (56) defines a first edge of a second pleat-like portion of said sheet (44) of masking material extending from said first fold (56) toward the first end (60) of said roll (45) of masking material along the inner major surface of said first pleat-like portion and having a second longitudinally extending edge adjacent the first end (60) of said roll (45) of masking material.

## Patentansprüche

1. Verfahren zum Schützen eines Oberflächenabschnitts vor einer Strahlungswärmequelle, wobei das Verfahren die folgenden Schritte umfaßt:
a) Bereitstellung einer Rolle (12; 45) von Abdeckmaterial mit einer Achse, wobei die Abdeckmaterialrolle (12; 45) eine aufgerollte längliche, dünne Weichfolie (14; 44) von Abdeckmaterial mit ersten und zweiten blanken Längskanten (13; 58 und 15; 59) umfaßt, und wobei die Abdeckmaterialrolle (12; 45) erste und zweite axial beabstandete Enden aufweist, wobei das erste Ende der Rolle (12; 45) durch die erste Längskante (13; 58) der Folie (14; 44) definiert ist, wobei die Folie (14; 44) des Abdeckmaterials eine Schicht (16; 46) eines elastischen Trägermaterials mit entgegengesetzten Hauptoberflächen aufweist sowie einen Überzug (18; 48) aus Metall auf einer der Oberflächen des Trägermaterials, wobei der Überzug ein Reflexionsvermögen von mindestens 50 Prozent der Strahlungswärme für die Folie (14; 44) des Abdeckmaterials vorsieht;
b) Bereitstellung einer Bandrolle (230), die eine aufgerollte Bandlänge (22) mit ersten und zweiten Längskanten (21 und (23) sowie einen Überzug (24) eines Haftklebers umfaßt;
c) Bereitstellung einer tragbaren Ausgabevorrichtung (25), die folgendes umfaßt: einen Rahmen (28) mit einem Griff (30) zur manuellen Bedienung der Ausgabevorrichtung (25); erste und zweite Spindeln (32 und 34) mit Achsen, wobei die Spindeln an dem Rahmen (28) so angebracht sind, daß sie um ihre Achsen drehbar sind, und wobei die Achsen zueinander einen Zwischenabstand aufweisen und zueinander parallel sind;
d) Anbringen der Bandrolle (20) koaxial um die erste Spindel (32), wobei sich die erste Kante (21) der Bandlänge (22) relativ zu den ersten und zweiten Spindeln (32 und 34) an einer ersten vorbestimmten axialen Position befindet;
e) Anbringen der Abdeckmaterialrolle (12; 45) koaxial um die zweite Spindel (34), wobei sich die erste Kante (13; 58) der Folie (14; 44) relativ zu den ersten und zweiten Spindeln (32 und 34) an einer zweiten vorbestimmten axialen Position befindet, und wobei sich die Breite der Bandlänge (22) von der ersten Position an der zweiten Position vorbei erstreckt, und wobei sich die Breite der Folie (14; 44) des Andeckmaterials von der zweiten Position an der ersten Position vorbei erstreckt, so daß sowohl ein Teilstück der Bandlänge (22) entlang der ersten Kante (21) der Bandlänge (22) als auch ein Teilstück der Folie (14; 44) des Andeckmaterials entlang der ersten Kante (13; 58) der Folie (14; 44) des Andeckmaterials zwischen der ersten und der zweiten Position angeordnet sind;
f) Abziehen des Bands (22) und der Folie (14; 44) des Andeckmaterials relativ zu dem Rahmen (28) entlang bestimmten Bahnen aus der Ausgabevorrichtung (25), wobei eine Bahn für die Bandlänge (22) von der Bandrolle (20) und eine Bahn für die Folie (14; 44) des Abdeckmaterials von der Abdeckmaterialrolle (12; 45) vorgesehen sind, wobei die Bahnen einen gemeinsamen Bahnenabschnitt aufweisen, so daß der Haftkleber (24) auf der ersten Kante (21) der Bandlänge (22) an dem Teilstück der Folie (14; 44) des Andeckmaterials entlang der ersten Kante (13; 58) der Folie (14; 44) des Abdeckmaterials haftet, so daß ein Band- und Abdeckmaterial-Verbundwerkstoff (37) mit entgegengesetzten Kanten gestaltet wird, der durch die zweiten Kanten (23 und 15; 59) der Bandlänge (22) und der Folie (14; 44) des Abdeckmaterials sowie einen freien Abschnitt des Überzugs (24) des Haftklebers entlang der zweiten Kante (23) der Bandlänge (22) definiert ist; und
g) Kleben des freien Abschnitts des Überzugs (24) des Haftklebers auf dem Band- und Abdeckmaterial-Verbundwerkstoff (37) auf eine Oberfläche, wobei sich die Folie (14; 44) des Abdeckmaterials zwischen dem zu schützenden Abschnitt der Außenoberfläche und der Strahlungswärmequelle befindet.

2. Schutzverfahren nach Anspruch 1, wobei der Oberflächenabschnitt einen Außenoberflächenabschnitt eines Kraftfahrzeugs (40) darstellt, und wobei sich die Folie (14; 44) des Abdeckmaterials in dem Schritt g) über den Abschnitt der Außenoberfläche des Kraftfahrzeugs (40) erstreckt, um diesen Abschnitt der Außenoberfläche des Kraftfahrzeugs (40) vor Strahlungswärme zu schützen, die dazu verwendet wird den Lack auf einem anderen frischlackierten Außenoberflächenabschnitt des Kraftfahrzeugs (40) zu härten.

3. Schutzverfahren nach Anspruch 2, ferner umfassend den Schritt des Abdeckens des vor der Strahlungswärme zu schützenden Abschnitts der Außenoberfläche des Kraftfahrzeugs (40) mit einer Polymerschicht (42) während der Strahlungserwärmung eines frischlackierten Außenoberflächenabschnitts des Kraftfahrzeugs (40), und wobei der freie Abschnitt des Überzugs (24) des Haftklebers auf dem Band- und Abdeckmaterial-Verbundwerkstoff (37) in dem Klebeschritt auf eine Oberfläche des Kraftfahrzeugs (40) geklebt wird, wobei sich das Abdeckmaterial über den Abschnitt der Außenoberfläche des Kraftfahrzeugs (40) unter der Polymerschicht (42) erstreckt um diesen Abschnitt der Außenoberfläche des Kraftfahrzeugs (40) vor Strahlungswärme zu schützen.

4. Schutzverfahren nach Anspruch 2, ferner umfassend den Schritt des Abdeckens des vor der Strahlungswärme zu schützenden Abschnitts der Außenoberfläche des Kraftfahrzeugs (40) mit einer Polymerschicht (42) während der Strahlungserwärmung eines frischlackierten Außenoberflächenabschnitts des Kraftfahrzeugs (40), und wobei der freie Abschnitt des Überzugs (24) des Haftklebers auf dem Band- und Abdeckmaterial-Verbundwerkstoff (37) in dem Klebeschritt auf eine Oberfläche der Polymerschicht (42) entgegengesetzt zu dem Kraftfahrzeug (40) geklebt wird, wobei sich das Abdeckmaterial über den Abschnitt der Außenoberfläche des Kraftfahrzeugs (40) und über die Polymerschicht (42) erstreckt um diesen Abschnitt der Außenoberfläche des Kraftfahrzeugs (40) vor Strahlungswärme zu schützen.

5. Tragbarer Zusammenbau (10) zur Gestaltung eines Verbundwerkstoffs (37), der sich zum Schützen einer Oberfläche eignet, wobei der tragbare Zusammenbau (10) folgendes umfaßt:
eine Rolle (12; 45) von Abdeckmaterial mit einer Achse, wobei die Abdeckmaterialrolle (12; 45) eine aufgerollte längliche, dünne Weichfolie (14; 44) von Abdeckmaterial mit ersten und zweiten blanken Längskanten (13; 58 und 15; 59) umfaßt, und wobei die Abdeckmaterialrolle (12; 45) erste und zweite axial beabstandete Enden aufweist, wobei das erste Ende der Rolle (12; 45) durch die erste Längskante (13; 58) der Folie (14; 44) definiert ist;
eine Bandrolle (230), die eine aufgerollte Bandlänge (22) mit ersten und zweiten Längskanten (21 und 23) sowie einen Überzug (24) eines Haftklebers umfaßt;
eine leicht tragbare Ausgabevorrichtung (25), die folgendes umfaßt: einen Rahmen (28) mit einem Griff (30), der manuell bedient werden kann; erste und zweite Spindeln (32 und 34) mit Achsen; Mittel zur Anbringung der Spindeln (32 und 34) an dem Rahmen (28), so daß sie um ihre Achsen drehbar sind, und wobei die Achsen zueinander einen Zwischenabstand aufweisen und zueinander parallel sind; Mittel zum koaxialen Anbringen der Bandrolle (20) um die erste Spindel (32), wobei sich die erste Kante (21) der Bandlänge (22) relativ zu den ersten und zweiten Spindeln (32 und 34) an einer ersten vorbestimmten axialen Position befindet; und Mittel zum koaxialen Anbringen der Abdeckmaterialrolle (12; 45) um die zweite Spindel (34), wobei sich die erste Kante (13; 58) der Folie (14; 44) relativ zu den ersten und zweiten Spindeln (32 und 34) an einer zweiten vorbestimmten axialen Position befindet, und wobei sich die Breite der Bandlänge (22) von der ersten Position an der zweiten Position vorbei erstreckt, und wobei sich die Breite der Folie (14; 44) des Abdeckmaterials von der zweiten Position an der ersten Position vorbei erstreckt, so daß sowohl ein Teilstück der Bandlänge (22) entlang der ersten Kante (21) der Bandlänge (22) als auch ein Teilstück der Folie (14; 44) des Abdeckmaterials entlang der ersten Kante (13; 58) der Folie (14; 44) des Abdeckmaterials zwischen der ersten und der zweiten Position angeordnet sind; ferner mit Einrichtungen zur Begrenzung von Bahnen an dem Rahmen (28) sowie mit Einrichtungen zur Positionierung der ersten Kanten (21 und 13) des Bands (22) bzw. der Folie (14; 44) des Abdeckmaterials relativ zu den Spindeln (32 und 34) an ersten und zweiten axialen Positionen, wobei die Einrichtungen zur Begrenzung von Bahnen eine Bahn für die Bandlänge (22) von der Bandrolle (20) und eine Bahn für die Folie (14; 44) des Abdeckmaterials von der Abdeckmaterialrolle (12; 45) und einen gemeinsamen Bahnenabschnitt begrenzen, wobei der Haftkleber (24) entlang der ersten Kante (21) der Bandlänge (22) als Reaktion auf das Abziehen des Bands (22) und der Folie (14; 44) des Abdeckmaterials aus der Ausgabevorrichtung (25) an dem Abschnitt der Folie (14; 44) des Abdeckmaterials entlang der ersten Kante (13; 58) der Folie (14; 44) des Abdeckmaterials haftet, so daß ein Band- und Abdeckmaterial-Verbundwerkstoff (37) mit entgegengesetzten Kanten gestaltet wird, der durch die zweiten Kanten (23 und 15; 59) der Bandlänge (22) und der Folie (14; 44) des Abdeckmaterials sowie einen freien Abschnitt des Überzugs (24) des Haftklebers entlang der zweiten Kante (23) der Bandlänge (22) definiert ist; wobei der freie Abschnitt des Überzugs (24) des Haftklebers auf eine Oberfläche geklebt werden kann, wobei sich die Folie (14; 44) des Abdeckmaterials entlang einer zu schützenden Oberfläche erstreckt, wobei der tragbare Zusammenbau dadurch gekennzeichnet ist, daß die Folie (14; 44) des Abdeckmaterials eine Schicht (16; 46) eines elastischen Trägermaterials mit entgegengesetzten Hauptoberflächen aufweist sowie einen Überzug (18; 48) aus Metall auf einer der Oberflächen des Trägermaterials, wobei der Überzug eine Reflexionsvermögen von mindestens 50 Prozent der Strahlungswärme für die Folie (14; 44) des Abdeckmaterials vorsieht, so daß die tragbare Zusammensetzung (10) einen Verbundwerkstoff (37) bildet, der sich dazu eignet eine Oberfläche dadurch vor Strahlungswärme zu schützen, daß der Verbundwerkstoff auf eine Oberfläche zwischen der zu schützenden Oberfläche und einer Strahlungswärmequelle geklebt wird.

6. Tragbarer Zusammenbau (10) nach Anspruch 5, wobei es sich bei dem elastischen Trägermaterial (16; 46) um Polyester mit einer Dicke im Bereich von 0,0064 bis 0,076 mm (0,00025 bis 0,003 Inch) handelt, und wobei es sich bei dem Metall in dem Überzug (18; 48) um Aluminium handelt.

7. Tragbarer Zusammenbau (10) nach Anspruch 5, wobei es sich bei dem elastischen Trägermaterial (16; 46) um Polyester mit einer Dicke im Bereich von 0,0127 bis 0,025 mm (0,0005 bis 0,001 Inch) handelt, und wobei es sich bei dem Metall in dem Überzug (18; 48) um Aluminium handelt, und wobei ein Reflexionsvermögen von mindestens 70 Prozent der Strahlungswärme für die Folie (14; 44) des Abdeckmaterials vorgesehen ist.

8. Tragbarer Zusammenbau (10) nach Anspruch 5, wobei es sich bei dem elastischen Trägermaterial (16; 46) um Polyester mit einer Dicke im Bereich von 0,0127 bis 0,025 mm (0,0005 bis 0,001 Inch) handelt, und wobei es sich bei dem Metall in dem Überzug (18; 48) um Aluminium handelt, und wobei ein Reflexionsvermögen von mindestens 70 Prozent der Strahlungswarme für die Folie (14; 44) des Abdeckmaterials vorgesehen ist, und wobei die Folie (14; 44) des Abdeckmaterials in der Abdeckmaterialrolle (12; 45) so angeordnet ist, daß sich der Überzug (18; 48) aus Metall relativ zu dem Radius der Rolle (12; 45) des Abdeckmaterials auf der Außenoberflache des Tragermaterials befindet.

9. Tragbarer Zusammenbau (10) nach Anspruch 5, wobei das Band (22) in der Bandrolle (20) über einen Zeitraum Strahlungswärme ausgesetzt werden kann, der normalerweise zum Härten von Lack erforderlich ist, und wobei das Band danach sauber von einem Substrat gelöst werden kann, an dem das Band haftet.

10. Tragbarer Zusammenbau (10) nach Anspruch 5, wobei die ersten und zweiten axial beabstandeten Enden der Abdeckmaterialrolle (12) durch die ersten und zweiten Langskanten (13 und 15) der Folie (14) des Abdeckmaterials begrenzt sind.

11. Tragbarer Zusammenbau (10) nach Anspruch 5, wobei die Folie (44) des Abdeckmaterials an dem zweiten Ende (57) der Rolle (45) des Abdeckmaterials und zwischen den ersten und zweiten Kanten (58; 59) der Folie (44) des Abdeckmaterials eine erste Falte (56) aufweist, wobei die erste Falte (56) eine zweite Kante eines ersten faltenähnlichen Abschnitts der Folie (44) des Abdeckmaterials definiert, der sich zwischen der ersten Falte (56) und der ersten Kante (59) der Folie (44) des Abdeckmaterials erstreckt, wobei der erste faltenähnliche Abschnitt entgegengesetzte innere- und äußere Hauptoberflächen aufweist, wobei die genannte äußere Hauptoberfläche relativ zu der genannten inneren Hauptoberfläche radial auswärts an der Rolle (45) des Abdeckmaterials angeordnet ist, und wobei die erste Falte (56) eine erste Kante eines zweiten faltenähnlichen Abschnitts der Folie (44) des Abdeckmaterials definiert, der sich von der ersten Falte (56) entlang der inneren Hauptoberfläche des ersten faltenähnlichen Abschnitts in Richtung des ersten Endes (60) der Rolle (45) des Abdeckmaterials erstreckt, und mit einer zweiten, sich der Länge nach erstreckenden Kante neben dem ersten Ende (60) der Rolle (45) des Abdeckmaterials.

## Revendications

1. Procédé pour protéger une portion de surface contre une source de chaleur rayonnante, ledit procédé comprenant les étapes:
a) de fourniture d'un rouleau (12; 45) de matériau de masquage ayant un axe, rouleau (12; 45) de matériau de masquage comprenant une fine feuille flexible, allongée et enroulée (14; 44) de matériau de masquage ayant un premier bord et un deuxième bord opposés, allongés et sans ruban (13; 58 et 15; 59) et le rouleau (12; 45) de matériau de masquage ayant une première et une deuxième extrémité axialement espacées, la première extrémité du rouleau (12; 45) étant définie par le premier bord allongé (13; 58) de la feuille (14; 44), la feuille (14; 44) de matériau de masquage comprenant une couche (16; 46) de matériau de support flexible ayant des surfaces principales opposées et un revêtement métallique (18; 48) sur une des surfaces du matériau de support assurant une réflectance d'au moins 50 pour cent de la chaleur rayonnante pour la feuille (14; 44) de matériau de masquage;
b) de fourniture d'un rouleau de ruban (20) comprenant une longueur enroulée de ruban (22) ayant un premier bord et un deuxième bord allongés (21 et 23) et comprenant un revêtement (24) d'adhésif sensible à la pression;
c) de fourniture d'un dispositif dévidoir portable (25) comportant un cadre (28) ayant une poignée (30) conçue pour une manipulation manuelle du dispositif dévidoir (25) et un première et un deuxième arbre (32 et 34) ayant chacun un axe et étant montés sur le cadre (28) pour qu'ils tournent autour de leur axe, les deux axes étant espacés et totalement parallèles;
d) de montage du rouleau de ruban (20) coaxialement autour du premier arbre (32), le premier bord (21) de la longueur de ruban (22) étant situé à une première position prédéterminée axialement par rapport au premier et au deuxième arbre (32 et 34);
e) de montage du rouleau (12; 45) de matériau de masquage coaxialement autour du deuxième arbre (34), le premier bord (13; 58) de la feuille (14; 44) étant situé à une deuxième position prédéterminée axialement par rapport au premier et au deuxième arbre (32 et 34), et la largeur de la longueur de ruban (22) s'étendant de la première position jusqu'au-delà de la deuxième position et la largeur de la feuille (14; 44) de matériau de masquage s'étendant de la deuxième position jusqu'au-delà de la première position de façon à ce qu'une portion de la longueur de ruban (22) le long du premier bord (21) de la longueur de ruban (22) et une portion de la feuille (14; 44) de matériau de masquage le long du premier bord (13; 58) de la feuille (14; 44) de matériau de masquage soient toutes deux placées entre la première et la deuxième position;
f) de déroulement du ruban (22) et de la feuille (14; 44) de matériau de masquage hors du dispositif dévidoir (25) suivant des chemins définis par rapport au cadre (28), à savoir un chemin pour la longueur de ruban (22) à partir du rouleau de ruban (20) et un chemin pour la feuille (14; 44) de matériau de masquage à partir du rouleau (12; 45) de matériau de masquage, les chemins comprenant une portion de chemin commune pour que l'adhésif sensible à la pression (24) le long du premier bord (21) de la longueur de ruban (22) se colle à la portion de feuille (14; 44) de matériau de masquage le long du premier bord (13; 58) de la feuille (14; 44) de matériau de masquage pour former un film composite (37) de ruban et de matériau de masquage ayant des bords opposés définis par les deuxièmes bords (23 et 15; 59) de la longueur de ruban (22) et de la feuille (14; 44) de matériau de masquage et une portion exposée du revêtement (24) d'adhésif sensible à la pression le long du deuxième bord (23) de la longueur de ruban (22); et
g) de collage de la portion exposée du revêtement (24) d'adhésif sensible à la pression sur le film composite (37) de ruban et de matériau de masquage sur une surface, la feuille (14; 44) de matériau de masquage s'étendant entre la portion de la surface extérieure à protéger et la source de chaleur rayonnante.

2. Procédé de protection selon la revendication 1, dans lequel ladite portion de surface est une portion de la surface extérieure d'une automobile (40) et dans lequel, à l'étape (g), la feuille (14; 44) de matériau de masquage s'étend au-dessus de la portion de la surface extérieure de l'automobile (40) pour protéger cette portion de la surface extérieure de l'automobile (40) contre la chaleur rayonnante utilisée pour sécher la peinture sur une autre portion fraîchement peinte de la surface extérieure de l'automobile (40).

3. Procédé de protection selon la revendication 2, comportant en outre l'étape de recouvrement par une toile polymère (42) de la portion de la surface extérieure de l'automobile (40) à protéger de la chaleur rayonnante lors de l'application d'un chauffage rayonnant sur une portion fraîchement peinte de la surface extérieure de l'automobile (40) et dans lequel, au cours de ladite étape de collage, la portion exposée du revêtement (24) d'adhésif sensible à la pression sur le film composite (37) de ruban et de matériau de masquage est collée sur une surface de l'automobile (40), le matériau de masquage s'étendant au-dessus de la portion de la surface extérieure de l'automobile (40) et en dessous de la toile polymère (42) pour protéger cette portion de la surface extérieure de l'automobile (40) contre la chaleur rayonnante.

4. Procédé de protection selon la revendication 2, comprenant en outre l'étape de recouvrement par une toile polymère (42) de la portion de la surface extérieure de l'automobile (40) à protéger de la chaleur rayonnante lors de l'application d'un chauffage rayonnant sur une portion fraîchement peinte de la surface extérieure de l'automobile (40) et dans lequel, au cours de ladite étape de collage, la portion exposée du revêtement (24) d'adhésif sensible à la pression sur le film composite (37) de ruban et de matériau de masquage est collée sur une surface de la toile polymère (42) recouvrant l'automobile (40), le matériau de masquage s'étendant au-dessus de la portion de la surface extérieure de l'automobile (40) et au-dessus de la toile polymère (42) pour protéger cette portion de la surface extérieure de l'automobile (40) contre la chaleur rayonnante.

5. Assemblage portable (10) pour former un film composite (37) utile pour protéger une surface, ledit assemblage portable (10) comprenant:
un rouleau (12; 45) de matériau de masquage ayant un axe, ledit rouleau (12; 45) comprenant une fine feuille flexible, allongée et enroulée (14; 44) de matériau de masquage ayant un premier bord et un deuxième bord allongés, opposés et sans ruban (13; 58 et 15; 59) et ledit rouleau (12; 45) de matériau de masquage ayant une première et une deuxième extrémité axialement espacées, ladite première extrémité dudit rouleau (12; 45) étant définie par le premier bord allongé (13; 58) de ladite feuille (14; 44);
un rouleau de ruban (20) comprenant une longueur enroulée de ruban (22) ayant un premier bord et un deuxième bord allongés (21 et 23) et comprenant un revêtement (24) d'adhésif sensible à la pression;
un dispositif dévidoir facile à porter (25) comprenant un cadre (28) ayant une poignée (30) conçue pour être bien saisie en main, un premier et un deuxième arbre (32 et 34) ayant chacun un axe, des moyens pour monter lesdits arbres (32 et 34) sur ledit cadre (28) pour qu'ils tournent autour de leur axe, lesdits axes étant espacés et totalement parallèles, des moyens pour monter ledit rouleau de ruban (20) coaxialement autour du premier arbre (32), le premier bord (21) de la longueur de ruban (22) étant situé à une première position prédéterminée axialement par rapport auxdits premier et deuxième arbres (32 et 34) et des moyens pour monter ledit rouleau (12; 45) de matériau de masquage coaxialement autour du deuxième arbre (34), le premier bord (13; 58) de la feuille (14; 44) de matériau de masquage étant situé à une deuxième position prédéterminée axialement par rapport auxdits premier et deuxième arbres (32 et 34) et la largeur de ladite longueur de ruban (22) s'étendant de la première position jusqu'au-delà de la deuxième position et la largeur de la feuille (14, 44) de matériau de masquage s'étendant de la deuxième position jusqu'au-delà de la première position de façon à ce qu'une portion de la longueur de ruban (22) le long du premier bord (21) de la longueur de ruban (22) et une portion de la feuille (14; 44) de matériau de masquage le long du premier bord (13; 58) de la feuille de matériau de masquage soient toutes deux placées entre ladite première et ladite deuxième position; et des moyens de définition d'un chemin sur ledit cadre (28) et des moyens d'inclusion pour positionner lesdits premiers bords (21 et 13) dudit ruban (22) et de ladite feuille (14; 44) de matériau de masquage respectivement auxdites première et deuxième positions axialement par rapport auxdits arbres (32 et 34), lesdits moyens de définition d'un chemin définissant un chemin pour ladite longueur de ruban (22) à partir dudit rouleau de ruban (20), un chemin pour ladite feuille (14; 44) de matériau de masquage à partir dudit rouleau (12; 45) de matériau de masquage et une portion de chemin commune où, suite au déroulement du ruban (22) et de ladite toile (14; 44) de matériau de masquage hors du dispositif dévidoir (25), l'adhésif sensible à la pression (24) le long du premier bord (21) de la longueur de ruban (22) se colle à ladite portion de la feuille (14; 44) de matériau de masquage le long du premier bord (13; 58) de la feuille (14; 44) de matériau de masquage pour former un film composite (37) de ruban et de matériau de masquage ayant des bords opposés définis par les deuxièmes bords (23 et 15; 59) de la longueur de ruban (22) et de la feuille (14; 44) de matériau de masquage et une portion exposée du revêtement (24) d'adhésif sensible à la pression le long du deuxième bord (23) de la longueur de ruban (22), ladite portion exposée du revêtement (24) d'adhésif sensible à la pression étant conçue pour être collée à une surface, la feuille (14; 44) de matériau de masquage s'étendant le long d'une surface à protéger, ledit assemblage portable (10) étant caractérisé par le fait que ladite feuille (14; 44) de matériau de masquage comprend une couche (16; 46) de matériau de support flexible ayant des surfaces principales opposées et un revêtement métallique (18; 48) sur une desdites surfaces dudit matériau de support flexible assurant une réflectance d'au moins 50 pour cent de la chaleur rayonnante pour ladite feuille (14; 44) de matériau de masquage de façon à ce que ledit assemblage portable (10) forme un film composite (37) utile pour protéger une surface d'une source de chaleur rayonnante en collant le film composite sur une surface située entre une surface à protéger et une source de chaleur rayonnante.

6. Assemblage portable (10) selon la revendication 5, dans lequel ledit matériau de support flexible (16; 46) est en polyester et a une épaisseur de l'ordre de 0,0064 à 0,076 mm (0,00025 à 0,003 pouce) et ledit métal dans ledit revêtement (18; 48) est de l'aluminium.

7. Assemblage portable (10) selon la revendication 5, dans lequel ledit matériau de support flexible (16; 46) est en polyester et a une épaisseur de l'ordre de 0,0127 à 0,025 mm (0,0005 à 0,001 pouce) et ledit métal dans ledit revêtement (18; 48) est de l'aluminium et assure une réflectance d'au moins 70 pour cent de la chaleur rayonnante pour ladite feuille (14; 44) de matériau de masquage.

8. Assemblage portable (10) selon la revendication 5, dans lequel ledit matériau de support flexible (16; 46) est en polyester et a une épaisseur de l'ordre de 0,0127 à 0,025 mm (0,0005 à 0,001 pouce), ledit métal dans ledit revêtement (18; 48) est de l'aluminium et assure une réflectance d'au moins 70 pour cent de la chaleur rayonnante pour ladite feuille (14; 44) de matériau de masquage, et ladite feuille (14; 44) de matériau de masquage dans ledit rouleau (12; 45) de matériau de masquage est disposée, ledit revêtement métallique (18; 48) étant situé sur la surface extérieure dudit matériau de support par rapport au rayon du rouleau (12; 45) de matériau de masquage.

9. Assemblage portable (10) selon la revendication 5, dans lequel ledit ruban (22) dans ledit rouleau de ruban (20) est conçu pour être exposé à une chaleur rayonnante pendant le temps habituellement nécessaire pour sécher la peinture et pour être ensuite retiré proprement du substrat auquel il est collé.

10. Assemblage portable (10) selon la revendication 5, dans lequel lesdites première et deuxième extrémités axialement espacées dudit rouleau (12) de matériau de masquage sont définies par le premier bord et le deuxième bord allongés (13 et 15) de ladite feuille (14) de matériau de masquage.

11. Assemblage portable (10) selon la revendication 5, dans lequel ladite feuille (44) de matériau de masquage a un premier repli s'étendant longitudinalement (56) à la deuxième extrémité (57) dudit rouleau (45) de matériau de masquage et entre lesdits premier et deuxième bords (58; 59) de ladite feuille (44) de matériau de masquage, ledit premier repli (56) définit un deuxième bord d'une première portion en forme de pli de ladite feuille (44) de matériau de masquage s'étendant entre ledit premier repli (56) et ledit premier bord (59) de ladite feuille (44) de matériau de masquage, ladite première portion en forme de pli a des surfaces principales intérieure et extérieure opposées, ladite surface principale extérieure étant disposée radialement vers l'extérieur sur ledit rouleau (45) de matériau de masquage par rapport à ladite surface principale intérieure, et ledit premier repli (56) définit un premier bord d'une deuxième portion en forme de pli de ladite feuille (44) de matériau de masquage s'étendant à partir dudit premier repli (56) vers la première extrémité (60) dudit rouleau (45) de matériau de masquage le long de la surface principale intérieure de ladite première portion en forme de pli et ayant un deuxième bord s'étendant longitudinalement de façon adjacente à la première extrémité (60) dudit rouleau (45) de matériau de masquage.
